# EUROPEAN PATENT SPECIFICATION

(11) **EP 4 357 006 B1**
(45) Date of publication and mention of the grant of the patent: **12.08.2026**
(21) Application number: 22824356.4
(22) Date of filing: 14.06.2022
(51) Int. Cl.: B01D 61/24, C11D 7/44, C09K 23/00

(54) **PRODUCTION OF A BIOSURFACTANT EXTRACT FROM CORN STEEP LIQUOR**
HERSTELLUNG EINES BIOTENSIDEXTRAKTS AUS MAISQUELLWASSER
OBTENTION D'UN EXTRAIT BIOSURFACTANT À PARTIR DE LIQUEURS DE LAVAGE DE MAÏS

(30) Priority: 16.06.2021 ES 202100059
(43) Date of publication of application: 24.04.2024
(73) Proprietor: Universidade de Vigo, 36310 Vigo (ES); Universitat Politècnica de Catalunya, 08034 Barcelona (ES)
(72) Inventor: VECINO BELLO, Xanel, 36310 Vigo (ES); MOLDES MENDUIÑA, Ana Belén, Vigo Campus Universitario de Vigo Vigo 36310 (ES); CRUZ FREIRE, Jose Manuel, 36310 Vigo (ES); MARTINEZ ARCOS, Andrea, 36310 Vigo (ES); REIG I AMAT, Mónica, 08339 Vilassar de Dalt (ES); CORTINA PALLAS, Jose Luis, Molins de Rei 08750 (ES)
(74) Representative: Clarke, Modet y Cía., S.L.
(86) International application number: PCT/ES2022/070373
(87) International publication number: WO 2022/263696

(56) References cited:
- EP-A1- 2 862 624
- ES-A1- 2 424 399
- ES-A1- 2 795 574
- ES-A1- 2 795 574
- DE SOUZA PATRÍCIA ET AL: "Production of a Biosurfactant by Cunninghamella echinulata Using Renewable Substrates and Its Applications in Enhanced Oil Spill Recovery", COLLOIDS AND INTERFACES, vol. 2, no. 4, 24 November 2018 (2018-11-24), pages 63, XP093262763, ISSN: 2504-5377, DOI: 10.3390/colloids2040063
- RODRÍGUEZ-LÓPEZ LORENA ET AL: "Biodegradability Study of the Biosurfactant Contained in a Crude Extract from Corn Steep Water", vol. 23, no. 1, 22 August 2019 (2019-08-22), pages 79 - 90, XP093262774, ISSN: 1097-3958, Retrieved from the Internet <URL:https://onlinelibrary.wiley.com/doi/full-xml/10.1002/jsde.12338> DOI: 10.1002/jsde.12338
- RODRIGUEZ-LOPEZ L ET AL.: "Extraction, separation and characterization of lipopeptides and phospholipids from corn steep water", SEPARATION AND PURIFICATION TECHNOLOGY, vol. 248, 2020, pages 1 - 8, XP086163063, Retrieved from the Internet <URL:https://www/sciencedirect.com/science/article/pii/S1383586620315501> [retrieved on 20210831], DOI: 10.1016/j.seppur.2020.117076
- RODRÍGUEZ-LÓPEZ L., VECINO X., BARBOSA-PEREIRA L., MOLDES A. B., CRUZ J. M.: "A multifunctional extract from corn steep liquor: antioxidant and surfactant activities", FOOD & FUNCTION, R S C PUBLICATIONS, GB, vol. 7, no. 9, 1 January 2016 (2016-01-01), GB , pages 3724 - 3732, XP093017649, ISSN: 2042-6496, DOI: 10.1039/C6FO00979D
- LÓPEZ-PRIETO, LÓPEZ-PRIETO, VECINO, RODRÍGUEZ-LÓPEZ, MOLDES, CRUZ: "A Multifunctional Biosurfactant Extract Obtained From Corn Steep Water as Bactericide for Agrifood Industry", FOODS, M D P I AG, CH, vol. 8, no. 9, 12 September 2019 (2019-09-12), CH , pages 410, XP093017647, ISSN: 2304-8158, DOI: 10.3390/foods8090410

## Description

### Technical Sector

The present invention pertains to obtaining detergents of natural origin in which clean technologies are also applied to obtain them.

The main objective of this invention is to obtain a biosurfactant extract from the liquid fraction of corn washing liquors by means of physical separation processes, without the use of organic solvents or buffer solutions.

### Background of the invention

It has been shown that from corn washing liquors biosurfactant extracts can be obtained with numerous applications in different industrial fields. The extracts obtained and evaluated until 2020 were obtained by liquid-liquid extraction using different organic solvents. The extraction and uses as well as the composition of these extracts are protected under the following patents: ES2424399B2, ES2435324B2, WO2014044876A1, ES2527366B1.

On the other hand, a new patent (ES2795574A1) has recently been published showing that it is possible to extract a biosurfactant extract from the solid fraction of corn washing liquors, which usually contain 50% solids, after solid-liquid extraction with different aqueous solutions comprising phosphate-buffered saline (PBS) solutions in the presence or absence of NaCl, followed by a dialysis process.

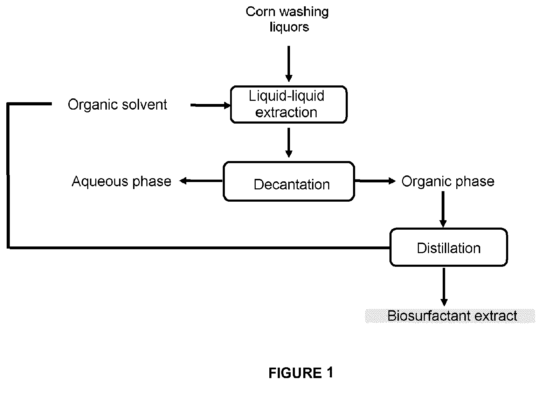

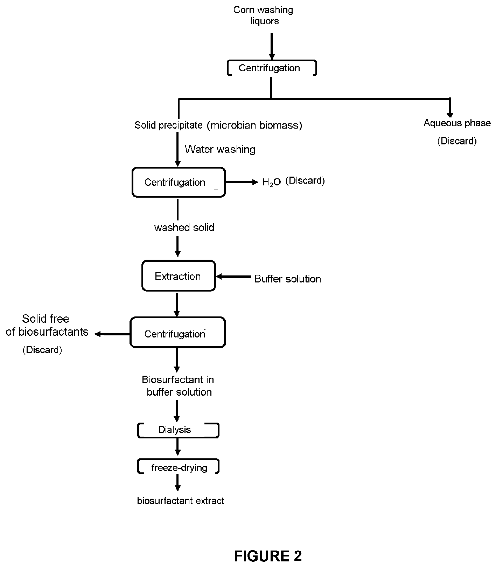

This extract has a different composition to the extract obtained from corn washing liquors using organic solvents, possibly because it contains biosurfactant compounds extracted from the plasma membrane of the microorganisms that make up the solid fraction of corn washing liquors. Figure 1 and Figure 2 show the scheme for the production of biosurfactants from corn washing liquors following the technology set out in patents ES2435324B2 and WO2014044876A1 (figure 1) and in patent ES2795574A1 (figure 2).

If a chronological study is carried out, the first publication on the surfactant capacity of corn washing liquors was in the Journal of Agricultural and Food Chemistry in 2014 (Vecino et al. 2014) followed by several publications where a biosurfactant extract obtained by liquid-liquid extraction with chloroform was obtained (Vecino et al. 2015, Bioprocess and Biosystems Engineering) applied in the formulation of bioadsorbents (Pérez Ameneiro et al. 2015, Carbohydrate Polymers); to the decontamination of sludge and soils (Vecino et al. 2015, Jounal of Agricultural and Food Chemistry; Bustos et al. 2018, Agrociencia); to nanoparticle formulations (Gómez-Graña et al. 2017, Nanomaterials); to cosmetic and personal care formulations (Rincón-Fontán et al. 2016, RSC Advances; Rincón-Fontán et al. 2017, RSC Advances; Rincón-Fontán et al. 2018, Powder Technology; Rincón-Fontán et al. 2019, Journal of Colloid and Interface Science; Rincón-Fontán et al. 2020, ACS Omega; Rincón-Fontán et al. 2020, Sustainable Chemistry and Pharmacy); as well as pharmaceutical formulations (Rodriguez-Lopez et al. 2019, Journal of Pharmaceutical Sciences; Rodriguez-Lopez et al. 2020, Journal of Dermatological Treatment).

On the other hand, the biosurfactant extract obtained from corn washing liquors using ethyl acetate has been evaluated for use in the food industry, demonstrating that it favors the growth of probiotic microorganisms (López-Prieto et al. 2019, Journal of the Science of Food and Agriculture); that it has antimicrobial power (López-Prieto et al. 2019, Foods; López-Prieto et al. 2020, Foods) and that favors the extraction of colored compounds during the winemaking processes in the maceration stage of red wine (Scalzini et al. 2020, Foods).

It has also been shown that one of the microorganisms responsible for the appearance of these biosurfactants in corn washing liquors is the Aneurinibacillus aneurinilyticus strain (López-Prieto et al. 2019, CyTA - Journal of Food; López-Prieto et al. 2021, Microbiological Research). This strain is a bacterium capable of forming spores that resist the conditions of the maceration process that takes place during the fractionation of corn by the wet route, capable of producing 2 types of different extracts with different properties, an extracellular biosurfactant extract and a cell-bound biosurfactant extract adhered to its plasma membrane.

Regarding the existing work on the separation and/or purification of surfactants and/or biosurfactants using membranes, please note that the existing bibliographic data refer to chemically synthesized surfactants or biosurfactants produced in controlled fermentations and of a different nature from those obtained from corn washing liquors. Kertész et al. (2008) used a nanofiltration membrane for the separation of an anionic surfactant CL80 (in concentrations between 0.5 to 5 g/L), with yields of 94%. Kaya et al. (2006) also used ultrafiltration membranes for the separation of chemically synthesized nonionic surfactants.

Fernández et al. (2005) published that it is possible to remove 70% of sodium dodecyl sulfate with the Membralox ceramic ultrafiltration membrane. Klimonda and Kowalska (2019) studied the removal of cationic surfactants (cetrimonium bromide, benzalkonium chloride and Tequat LC90i) by using polymeric membranes in ultrafiltration and nanofiltration processes (in concentrations between 50 and 3000 mg/L). These authors observed that the efficiency of the process is affected by the concentration of surfactant, the type of membrane polymer and the size of its pores. The separation of cetrimonium bromide exceeded 90% with both types of processes, with 70% being the maximum retention for benzalkonium chloride with nanofiltration membranes, while the separation of Tequat LC90i was very high and reached up to 100% with the use of ultrafiltration membranes.

Regarding studies with membranes applied to biosurfactants, Mulligan and Gibbs (1990) were the first to use ultrafiltration membranes for the separation of biosurfactants, produced in controlled fermentations, including surfactin and rhamnolipids. Subsequently, Witek-Krowiak et al. (2011) proposed a two-step ultrafiltration process to separate and purify rhamnolipids from culture media. This two-step ultrafiltration method consisted of a first step where membranes of a high molecular weight cut-off are used to isolate the micelles contained in the concentrate, which is subsequently diluted with alcohol (to break the micelles) and the obtained solution is subjected to ultrafiltration again using a low molecular weight cut-off membrane to separate the biosurfactant from any component of the medium occluded by the micelle structure. As a result, the retentate contained proteins and other macromolecules, while the permeate contained a pure biosurfactant solution.

In addition, Isa et al. (2007) proposed the same two-stage ultrafiltration process for the surfactin purification process. In addition, Coutte et al. (2013) proposed recovering the surfactin from the culture media after applying the microfiltration and ultrafiltration processes, obtaining a biosurfactant extract with a purity of up to 95%. Single-step ultrafiltration must be carried out at concentrations below the critical micelle concentration of the biosurfactants otherwise the micelles (and therefore most of the biosurfactant) would be removed due to their larger size. However, micelle formation has been used as an advantage in a slightly more complex two-step ultrafiltration method (Isa et al. 2007; Baker & Chen, 2010).

In relation to the use of dialysis processes for the separation of biosurfactants from fermented aqueous media, Ciandrini et al. (2016) have obtained a biosurfactant extract after fermenting the commercial media Man Rogosa and Shape (MRS) agar (Oxoid, UK) at 37°C for 24-48 h under microaerobic conditions (5% O2; 10% CO 2; 85% N 2), using different lactic bacteria. In these studies, the medium, once fermented, was centrifuged at 17000 rpm for 15 min at 4 °C and filtered with a 0.22 µm Millipore filter to finally dialyze it with a 1 and 6 kDa Spectra/Por^{MR} membrane. Biosurfactants obtained from lactic bacteria are classified as glycolipids or glycolipopeptides (Sharma et al. 2016, Springer Briefs in Microbiology) with a different nature to the biosurfactants contained in corn washing liquors consisting mainly of lipopeptides and phospholipids (Rodriguez-Lopez et al. 2020, Separation and Purification Technology). On the other hand, Chandran and Das (2012) have separated biosurfactants produced by Candidad *tropicalis* from a fermented medium under controlled conditions by solid-liquid extraction using a silica gel column followed by dialysis.

The biosurfactants present in this extract have a different nature from the biosurfactants contained in corn wash liquors. Until now, dialysis processes have been routinely applied, in the recovery of biosurfactants, to the aqueous extract obtained after subjecting the microbial biomass, mainly lactic bacteria, to an extraction process with phosphate buffer (Gudiña et al., 2010, Colloids and Surfaces B: Biointerfaces; Gudiña et al., 2015, RSC Advances; Ferreira et al. 2017, Colloids and Surfaces B: Biointerfaces; Vecino et al. 2017, Journal of Industrial and Engineering Chemistry; Satpute et al. 2019, BMC Microbiology).

It should be noted that these processes are totally different from the technology contained in the present invention, since in the present invention the dialysis process is applied directly to a fermented medium and not to the aqueous extract obtained after washing and subjecting the biomass to an extraction process with phosphate buffer. On the other hand, it should be noted that all the processes described above and that contemplate the use of membranes have been applied to fermented media under controlled conditions with a specific microorganism and that in no case was the use of a dialysis process to recover and/or separate biosurfactants from a secondary industrial stream such as corn washing liquors contemplated.

In this sense, the publication that is closest to the proposed technology is the patent (ES2795574A1), but it should be noted that the dialysis process, in this case, is applied to a totally different matrix. In the present invention the dialysis process is applied to the aqueous phase of the corn washing liquors directly after removing the solids, while in the patent (ES2795574A1), already published, the dialysis process is applied to a buffer solution containing the biosurfactants extracted from the solid fraction present in the corn washing liquors.

### Explanation of the invention

A process is proposed for obtaining biosurfactants from corn washing liquors, generated during the wet fractionation of corn, using only physical separation processes. The biosurfactant extract obtained has properties similar to the extract obtained from the solid fraction of corn washing liquors, by solid-liquid extraction, based on mass spectrophotometry analyses it can be corroborated that its composition is different.

### Detailed explanation of the invention

The corn washing liquors were taken and subjected to a pretreatment consisting of several centrifugation steps (50-5000 rpm, 4-40°C) and/or filtration, using ream paper (grammage up to 60 g/m²) and filters of size up to 0.45 µm. Subsequently, the aqueous fraction of the corn washing liquors was adjusted to pH values between 2 and 6 and subjected to several dialysis processes at different temperatures (4-25°C) and with different membranes, between 8 kDa and 1 kDa, in order to optimize the operating conditions and select that extract with the best biosurfactant properties.

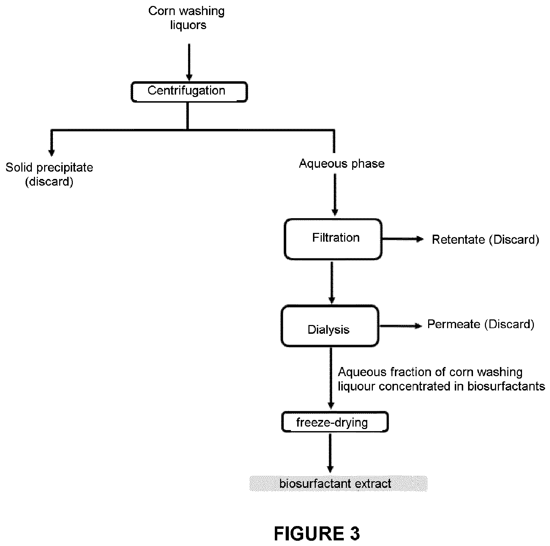

Figure 3 shows, by way of example, the scheme of one of the processes proposed to obtain a biosurfactant extract from the corn washing liquors by applying physical separation processes. This scheme comprises a process involving 3 separation steps: centrifugation, filtration and dialysis. Although the extract obtained from the corn washing liquors, by means of 2 processes (centrifugation or filtration, followed by dialysis) has properties similar to that obtained by the sequential application of centrifugation, filtration and dialysis processes, the latter sequence of processes is selected as optimal in order to obtain a biosurfactant extract free of microbial biomass and as sanitized as possible.

After completing the dialysis process, the aqueous fraction rich in biosurfactants is freeze-dried for storage. The characterization analyses of the biosurfactant extract were performed once it was lyophilized.

### Brief description of the drawings

To complement the description made and in order to help a better understanding of the characteristics of the invention, a set of drawings is attached as an integral part of said description, in which, with an illustrative and non-limiting nature, the following has been represented:
**Figure 1****.** Scheme of the process proposed for obtaining biosurfactants from corn washing liquors using organic solvents. The extraction process is applied to the two fractions that make up the liquid and solid corn wash liquors. With this methodology, a biosurfactant extract with an oily appearance is obtained.
**Figure** 2. Scheme proposed for obtaining biosurfactants from the solid fraction of corn washing liquors. The process includes centrifugation of the corn wash liquors, washing of the solid fraction and solid-liquid extraction of the washed solid fraction with different buffer solutions. In this way, the biosurfactant compounds that are adhered to the plasma membrane of the microbial biomass that make up the corn washing liquors are obtained. The biosurfactant extract obtained after freeze-drying has a white powder appearance and has foaming capacity.
**Figure** 3. Scheme proposed in this invention for obtaining biosurfactants from corn washing liquors by means of physical separation processes. The corn washing liquors are centrifuged and filtered to remove the solid fraction that makes up the corn washing liquors, including the microbial biomass, and subsequently the aqueous fraction is subjected to a dialysis process in order to obtain an extract concentrated in biosurfactants, produced extracellularly by the microorganisms that grow in the corn washing liquors naturally. After freeze-drying this extract, it appears in the form of a yellow-white powder, with a limited ability to form a foam, but with good surfactant properties.

### Preferential embodiment of the invention

Extractions were made to corn washing liquors supplied by FeedStimulants (Utrecht, Netherlands). The extract object of this invention was obtained, from corn washing liquors, after sequentially applying different physical separation processes comprising centrifugation, filtration and dialysis. The selected process does not include any pH adjustment, although separation processes at different pHs were also tested, as shown in **Table 1.** Alternatively, the sequential application of centrifugation and dialysis is also proposed, but in this way a more impure biosurfactant extract is obtained. In addition, among the alternative processes for obtaining this biosurfactant extract, a pH adjustment pretreatment between 2-6 is contemplated, although the surfactant properties of the obtained biosurfactant are not greatly improved with respect to the preferred process selected where the pH of the corn washing liquors was not altered (Table 1).

**Table 1. Steps used during the process of obtaining the biosurfactant extract through physical separation processes.**

| No. of separation | Centrifugation | Filtration | Dialysis | PH adjustment |
|---|---|---|---|---|
| 3 | Yes | YES | Yes | No |
| 3 | Yes | Yes | Yes | acidification |
| 3 | Yes | Yes | Yes | basification |
| 2 | Yes | No | Yes | No |
| 2 | Yes | No | Yes | acidification |
| 2 | Yes | No | Yes | basification |
| 2 | No | Yes | Yes | No |
| 2 | No | Yes | Yes | acidification |
| 2 | No | Yes | Yes | basification |

After freeze-drying the aqueous fraction obtained from the corn washing liquors subjected to the physical separation processes included in **Table 3,** a biosurfactant extract capable of reducing the surface tension of the medium by more than 16 units (considering the surface tension of water of 72 mN/m as a control) and with a critical micelle concentration of less than 0.13 g/L is obtained. Regarding the molecular weights of the compounds that make up these extracts, the presence of biomarkers between 210 and 1422 m/z as well as high molecular weight proteins detected by electrophoresis is observed. As for the elemental analysis of the biosurfactant extracts obtained, they have a carbon content of between 34-36% and a nitrogen content of 8-9%, observing a nitrogen enrichment.

In comparison with the biosurfactant extracts obtained from the corn washing liquors by other methods reported in the literature, the biosurfactant extracts obtained in the present invention reduce the surface tension of water to a lesser extent than the biosurfactant extract obtained by liquid-liquid extraction processes with organic solvents (surface tension reductions between 28-33 units) with a lower CMC (0.12 to 0.31 g/L) (Rincón-Fontán et al. 2016, CSR Advances; Lopez-Rodriguez et al. 2018, Tenside Surfactants and Detergents;

Rincón-Fontán et al. 2018, Powder Technology; Lopez-Rodriguez et al. 2019, Journal of Pharmaceutical Sciences; Rincón-Fontán et al. 2020, ACS Omega; Lopez-Rodriguez et al. 2020, Journal of Dermatological Treatment; López-Prieto et al. 2019, Foods; López-Prieto et al. 2020, Foods).

On the other hand, the biosurfactant extract of the present invention has an ability to reduce the surface tension of water similar to the biosurfactant extract obtained from the solids contained in the corn washing liquors, by means of solid-liquid extraction with buffer solutions (between 16-20 units), but the latter has a higher CMC (0.42 g/L) (patent ES2795574A1).

Of the 2 processes contemplated above for obtaining biosurfactants from corn washing liquors, it should be noted, in chronological order, that in the first of them **(****Figure 1****)** said biosurfactants are obtained from the solid and liquid joint fraction of the corn washing liquors by applying a separation process by liquid-liquid extraction with organic solvents that does not overlap with the process proposed in the present invention, where biosurfactants are concentrated from the liquid fraction of said liquors (free of solids), by dialysis of the aqueous fraction, thus obtaining a biosurfactant extract with properties very different from that obtained by applying the liquid-liquid extraction processes included in the patents (ES2435324B2 and WO2014044876A1).

Regarding the second process contemplated **(****Figure 2****),** it should be noted that the biosurfactants, referred to the patent (ES2795574A1), are obtained from the solid fraction contained in the corn washing liquors, which is a differentiating element with respect to the present invention, where the biosurfactants are obtained from the aqueous fraction of the corn washing liquors. In addition, the process proposed to obtain the biosurfactants from the corn washing liquors according to patent ES2795574A1, comprises a solid-liquid extraction process with different buffers, resulting in a buffer solution rich in biosurfactants that were adhered to the microbial biomass of the corn washing liquors, which does not overlap with the process proposed in the present invention based solely on physical separation processes to separate and/or concentrate the biosurfactants produced extracellularly by the microorganisms that grow naturally in the corn washing liquors.

## Claims

1. A process for the extraction of biosurfactants from corn washing liquors comprising the steps of separating the liquid fraction from the corn washing liquors by means of physical separation processes comprising centrifugation and/or filtration followed by dialysis of said liquid fraction.

2. The process for extracting biosurfactants from corn wash liquors according to claim 1, further comprising adjusting the pH to a value between 2-6 prior to dialysis.

3. Use or application of the biosurfactants obtained from the liquid fraction of the corn washing liquors, after subjecting them to the separation processes, according to claim 1 or 2, as a surfactant and/or emulsifying agent in the food, cosmetic, pharmaceutical, agrochemical or environmental industry.

4. Use or application of the biosurfactants obtained from the liquid fraction of the corn washing liquors, after subjecting them to the separation processes, according to claim 1 or 2, as a surfactant and/or emulsifying agent in the cleaning of surfaces.

5. Use or application of the biosurfactants obtained from the liquid fraction of the corn washing liquors, after subjecting them to the separation processes, according to claim 1 or 2, to improve the permeability of formulas containing active ingredients, through the cell membranes, intended for cosmetic, pharmaceutical and agrochemical uses.

## Patentansprüche

1. Verfahren zur Gewinnung von Biotensiden aus Maiswaschwasser, umfassend die Schritte des Abtrennens der flüssigen Fraktion aus dem Maiswaschwasser mittels physischer Trennverfahren, umfassend Zentrifugation und/oder Filtration, gefolgt von Dialyse der flüssigen Fraktion.

2. Verfahren zur Gewinnung von Biotensiden aus Maiswaschwasser nach Anspruch 1, ferner umfassend das Einstellen des pH-Werts auf einen Wert zwischen 2-6 vor der Dialyse.

3. Verwendung oder Anwendung der aus der flüssigen Fraktion des Maiswaschwassers gewonnenen Biotenside, nachdem diese den Trennverfahren unterzogen wurden, nach Anspruch 1 oder 2, als Tensid und/oder Emulgator in der Lebensmittel-, Kosmetik-, Pharma-, Agrochemie- oder Umweltindustrie.

4. Verwendung oder Anwendung der aus der flüssigen Fraktion des Maiswaschwassers gewonnenen Biotenside, nachdem diese den Trennverfahren unterzogen wurden, nach Anspruch 1 oder 2, als Tensid und/oder Emulgator bei der Reinigung von Oberflächen.

5. Verwendung oder Anwendung der aus der flüssigen Fraktion des Maiswaschwassers gewonnenen Biotenside, nachdem diese den Trennverfahren unterzogen wurden, nach Anspruch 1 oder 2, zur Verbesserung der Durchlässigkeit von Formeln, die Wirkstoffe enthalten, durch die Zellmembranen, die für kosmetische, pharmazeutische und agrochemische Verwendungen bestimmt sind.

## Revendications

1. Procédé d'extraction de biosurfactants à partir de liquides de lavage de maïs, comprenant les étapes consistant à séparer la fraction liquide des liquides de lavage de maïs au moyen de procédés de séparation physique comprenant une centrifugation et/ou une filtration, suivie d'une dialyse de ladite fraction liquide.

2. Procédé d'extraction de biosurfactants à partir de liquides de lavage de maïs selon la revendication 1, comprenant en outre l'ajustement du pH à une valeur comprise entre 2 et 6 avant la dialyse.

3. Utilisation ou application des biosurfactants obtenus à partir de la fraction liquide des liquides de lavage de maïs, après les avoir soumis aux procédés de séparation selon la revendication 1 ou 2, en tant qu'agent tensioactif et/ou agent émulsifiant dans l'industrie alimentaire, cosmétique, pharmaceutique, agrochimique ou environnementale.

4. Utilisation ou application des biosurfactants obtenus à partir de la fraction liquide des liquides de lavage de maïs, après les avoir soumis aux procédés de séparation selon la revendication 1 ou 2, en tant qu'agent tensioactif et/ou agent émulsifiant dans le nettoyage de surfaces.

5. Utilisation ou application des biosurfactants obtenus à partir de la fraction liquide des liquides de lavage de maïs, après les avoir soumis aux procédés de séparation selon la revendication 1 ou 2, pour améliorer la perméabilité, à travers les membranes cellulaires, de formulations contenant des principes actifs et destinées à des utilisations cosmétiques, pharmaceutiques et agrochimiques.
